# EUROPÄISCHE PATENTSCHRIFT

(11) **EP 2 737 616 B1**
(45) Veröffentlichungstag und Bekanntmachung des Hinweises auf die Patenterteilung: **15.08.2018**
(21) Anmeldenummer: 12721288.4
(22) Anmeldetag: 15.05.2012
(51) Int. Cl.: H02M 5/44, H02M 5/458, H02M 1/00

(54) **SCHALTNETZTEIL UND VERFAHREN ZUM BETREIBEN DES SCHALTNETZTEILS**
SWITCH MODE POWER SUPPLY AND METHOD FOR OPERATING THE SWITCH MODE POWER SUPPLY
ALIMENTATION À DÉCOUPAGE ET PROCÉDÉ DESTINÉ AU FONCTIONNEMENT D'UNE ALIMENTATION À DÉCOUPAGE

(30) Priorität: 26.07.2011 EP 11175353
(43) Veröffentlichungstag der Anmeldung: 04.06.2014
(73) Patentinhaber: Siemens Aktiengesellschaft, 80333 München (DE)
(72) Erfinder: PORTISCH, Daniel, A-2170 Kleinhadersdorf (AT); DRESCHER, Hans, A-1210 Wien (AT)
(74) Vertreter: Maier, Daniel Oliver
(86) Internationale Anmeldenummer: PCT/EP2012/059009
(87) Internationale Veröffentlichungsnummer: WO 2013/013850

(56) Entgegenhaltungen:
- DE-A1- 4 425 547
- DE-A1- 10 159 639
- DE-A1- 10 254 236
- DE-A1-102007 060 893
- unknown: "Technical Datasheet FLEX-4", SEMICONDUCTOR CIRCUITS, INC. , 20. Mai 2011 (2011-05-20), XP002670746, Gefunden im Internet: URL:http://www.dcdc.com/PDF/FLEX-4%20Datas heet%20R_1.0.pdf [gefunden am 2012-03-02]

## Beschreibung

Die Erfindung betrifft ein Verfahren zum Betreiben eines Schaltnetzteils, welches eine Steuerung zur Ansteuerung eines im Schaltnetzteil angeordneten Schaltelements umfasst und an einen Zwischenkreis eines Umrichters angeschlossen ist, gemäß Anspruch 1. Zudem betrifft die Erfindung ein Schaltnetzteil, welches eine Steuerung zur Ansteuerung eines im Schaltnetzteil angeordneten Schaltelements umfasst und an einen Zwischenkreis eines Umrichters angeschlossen ist, gemäß Anspruch 3 und eine Verwendung des Schaltnetzteils gemäß Anspruch 11. Vorteilhafte Ausführungsformen sind in den abhängigen Ansprüchen definiert. Umrichter werden genutzt, um Lasten wie beispielsweise drehzahlregelbare Maschinen an ein Drehstromnetz anzuschalten. Dabei liegt ein Zwischenkreis über einen Gleichrichter an dem Drehstromnetz an und aus dem Zwischenkreis wird über eine entsprechende Brückenschaltung die Last angesteuert. Es ist üblich, dass die Zwischenkreisspannung über einen Widerstand, insbesondere über einen PTC-Widerstand, und ein Hilfsschütz hochgeladen wird. Bei z.B. 95% der Ladung wird diese aus Widerstand und Hilfsschütz bestehende Vorschaltung mittels eines Hauptschützes überbrückt.

Regelmäßig wird das Hochladen des Zwischenkreises mit einer Überwachungsschaltung kontrolliert, um das Auftreten eines Spannungseinbruchs festzustellen. Ein solcher Spannungseinbruch kommt beispielsweise vor, wenn eine Last ab einer bestimmten Spannung fehlerhafterweise kurzschließt. Deshalb schaltet die Umrichtersteuerung in einen Störungsmodus, sobald ein Spannungseinbruch erkannt wird. Stromversorgungen, welche an einen solchen Zwischenkreis eines Umrichters angeschlossen sind, müssen diese Gegebenheiten berücksichtigen. Nach dem Stand der Technik umfasst eine gegenständliche Anordnung eine Meldeeinrichtung, um der Stromversorgung zu signalisieren, dass ein Zwischenkreisladevorgang abgeschlossen bzw. weitgehend abgeschlossen ist. Erst dann schaltet die Stromversorgung ein und es wird vermieden, dass die Überwachungsschaltung das Einschalten der Stromversorgung als fehlerhaften Spannungseinbruch erkennt. Nachteilig ist dabei jedoch der zusätzliche Verkabelungsaufwand und die Eingangsleitungen müssen gegen Störungen entsprechend geschützt werden.

Beispielsweise offenbart die DE 101 59 639 A1 eine gattungsgemäße Stromversorgung, welche zur Lieferung einer Gleichspannung an einen Spannungszwischenkreis eines Umrichters geschaltet ist.

Aus der DE 10 2007 060 893 A1 sind verschiedene Verfahren zum Aufladen eines Umrichter-Zwischenkreises bekannt.

Die Schrift "Technical Datasheet FLEX-4", Semiconductor Circuits, Inc., 20. Mai 2011, offenbart einen DC-DC-Konverter mit einem programmierbaren Startup Delay.

Der Erfindung liegt die Aufgabe zugrunde, für ein Schaltnetzteil der eingangs genannten Art eine Verbesserung gegenüber dem Stand der Technik anzugeben. Zudem soll ein Verfahren zum Betreiben des Schaltnetzteils angegeben werden.

Erfindungsgemäß wird diese Aufgabe gelöst durch die unabhängigen Ansprüche 1, 3 und 11. Weiterbildungen finden sich in den abhängigen Ansprüchen.

Dabei ist vorgesehen, dass ein Schwellwert einer eingangsseitig am Schaltnetzteil anliegenden Zwischenkreisspannung erkannt wird, dass ab Erreichen des Schwellwerts eine Startverzögerungsdauer beginnt und dass bis zum Ablaufen der Startverzögerungsdauer die Ansteuerung des Schaltelements blockiert ist. Die Startverzögerungsdauer ist dabei länger als die Zeitspanne zur Zwischenkreisladung. Übliche Zwischenkreisladungen dauern in der Regel ca. 3 bis 6 Sekunden. Eine ausreichend lange Startverzögerungsdauer von z.B. 10 Sekunden bewirkt, dass das Schaltnetzteil immer erst dann zu takten beginnt, wenn die Zwischenkreisladung beendet ist oder zumindest soweit fortgeschritten ist, dass ein geringfügiger Spannungseinbruch infolge des Schaltnetzteilstarts nicht als Störfall erkannt wird.

Das Schaltnetzteil benötigt keine weiteren Signale, um den Ablauf eines Zwischenkreis-Ladevorgangs zu erfassen.

Zur Einstellung einer geänderten Startverzögerungsdauer ist es von Vorteil, wenn mittels eines Funktionsschalters ein Programmiermodus aktiviert wird, während dem ein Meldeelement wiederkehrende Signale zum Anzeigen der einzustellenden Startverzögerungsdauer abgibt und wenn die Startverzögerungsdauer durch nochmalige Betätigung des Funktionsschalters festgelegt wird. Ein solcher Einstellvorgang ist mit einfachen Bedienelementen durchführbar.

Ein erfindungsgemäßes Schaltnetzteil umfasst eine Steuerung zur Ansteuerung eines Schaltelements und ist an einen Zwischenkreis eines Umrichters angeschlossen, wobei die Steuerung zur Durchführung eines genannten Verfahrens eingerichtet ist, sodass das Schaltnetzteil ein Startup-Delay aufweist und die Ansteuerung des Schaltelements blockiert ist, bis die vorgegebene Startverzögerungsdauer abgelaufen ist.

In einer weiteren Ausgestaltung ist vorgesehen, dass das Schaltnetzteil einen Schaltkreis zum Erfassen eines eingangsseitigen Spannungsanstiegs aufweist und dass eine Sperrschaltung vorgesehen ist, um die Ansteuerung des Schaltelements während der Startverzögerungsdauer zu blockieren. Damit ist die gewünschte Funktion einer Startverzögerung des Schaltnetzteils auf einfache Weise umgesetzt.

Von Vorteil ist es, wenn das Schaltnetzteil einen DIP-Schalter zur Aktivierung des Startup-Delay umfasst. Ein derart ausgeführtes Schaltnetzteil ist universell verwendbar. Entsprechend den gegebenen Einsatzbedingungen ist die Startup-Delay-Funktion mittels DIP-Schalter aktivierbar oder deaktivierbar.

Vorteilhaft ist es zudem, wenn die Startverzögerungsdauer mittels Bedienmittel des Schaltnetzteils einstellbar ist. Auf diese Weise ist das Schaltnetzteil auf unterschiedliche Umrichterzwischenkreise anpassbar. Für Umrichter, die eine kürzere Dauer zur Zwischenkreisladung benötigen, wird die Startverzögerungsdauer verkürzt, damit die vom Schaltnetzteil gelieferte Versorgungsspannung schneller zur Verfügung steht.

In einfacher Weise geschieht dies, indem das Schaltnetzteil einen Funktionsschalter zur Einstellung der Startverzögerungsdauer umfasst. In einer einfachen Ausführung ist der DIP-Schalter als Funktionsschalter zur Startverzögerungsdauereinstellung ausgebildet.

Günstigerweise umfasst das Schaltelement auch ein Meldeelement zur Einstellung der Startverzögerungsdauer. Ein Leuchtelement oder ein Tongeber ermöglicht dabei eine einfache Ausgabe der eingestellten Startverzögerungsdauer.

Erfindungsgemäß ist vorgesehen, dass das Schaltnetzteil zur Versorgung einer Steuerung des Umrichters verwendet wird. Im Allgemein ist es von Vorteil, wenn das Schaltnetzteil zur Versorgung des Umrichters und/oder dessen Peripherie verwendet wird.

Die Erfindung wird nachfolgend in beispielhafter Weise unter Bezugnahme auf die beigefügten Figuren erläutert. Es zeigen in schematischer Darstellung:
- Fig. 1: Blockschaltbild einer Umrichterschaltung
- Fig. 2: Verläufe einer Zwischenkreisspannung

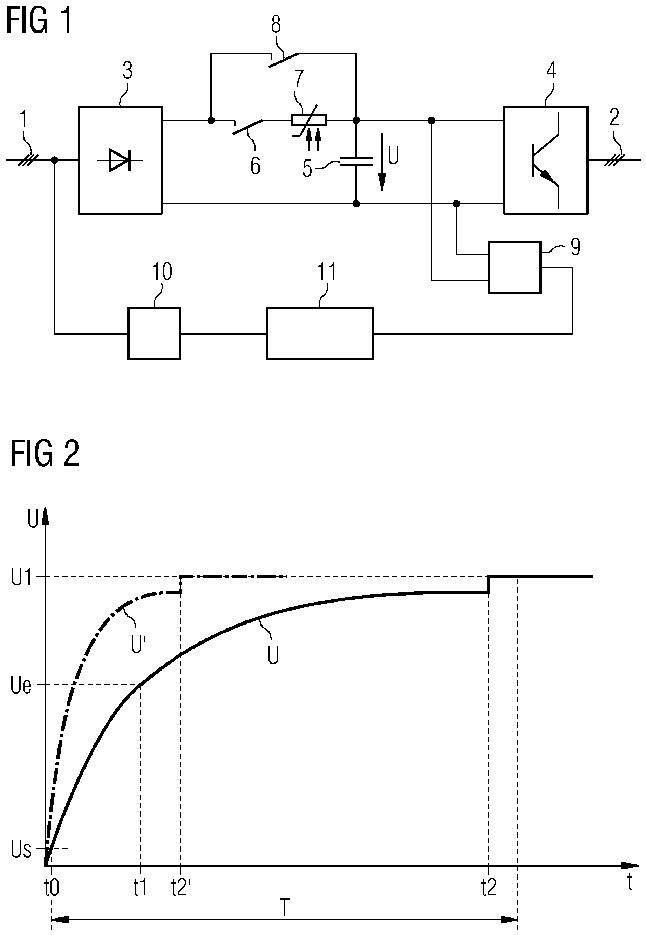

In Fig. 1 ist eine Umrichterschaltung dargestellt. Ein erfindungsgemäßes Schaltnetzteil 9 ist an eine Zwischenkreisspannung U, welche an einem Zwischenkreiskondensator 5 anliegt, angeschlossen. Gespeist wird der Zwischenkreis über eine Gleichrichterschaltung 3, welche an ein dreiphasiges Netz 1 angeschlossen ist. Ein dreiphasiger Ausgangsanschluss 2 zum Anschließen einer Drehstrommaschine ist über eine Brückenschaltung 4 an den Zwischenkreis angeschaltet.

Eine beispielhafte Hochladeschaltung für den Zwischenkreis besteht aus einem Widerstand 7 (z.B. PTC-Widerstand) und einem in Serie geschalteten Hilfsschütz 6. Sobald eine bestimmte Ladung (z.B. 95% der Nenn-Zwischenkreisspannung U1) erreicht ist, werden der Widerstand 7 und das Hilfsschütz 6 mit einem Hauptschütz 8 überbrückt. Als alternative Hochladeschaltungen sind beispielsweise ein Sperrwandler, ein Tiefesetzer oder ein aktiver Gleichrichter zum langsamen Hochtakten einsetzbar.

Üblicherweise wird das Hochladen eines Zwischenkreises mittels einer Überwachungsschaltung überwacht. Sobald eine negative Spannungsänderung (-du/dt) während einer Hochladephase erkannt wird, geht der Umrichter in einen Störungsmodus.

Das Schaltnetzteil 9 dient der Versorgung einer Umrichtersteuerung 11, welche parallel dazu über eine Hauptstromversorgung 10 direkt an das Versorgungsnetz 1 angeschaltet ist. Im Normalbetrieb erfolgt die Versorgung über die Hauptstromversorgung 10. Das am Zwischenkreis angeschlossene Schaltnetzteil 9 übernimmt die Versorgung bei Netzausfällen. Die im Zwischenkreis gespeicherte Energie bestimmt dabei die Dauer eines überbrückbaren Netzausfalls.

Fig. 2 zeigt den Spannungsanstieg einer Zwischenkreisspannung U während einer Hochladephase. Die Spannung U steigt bis zu einem Zeitpunkt t2 an, bei dem z.B. 95% der Nenn-Zwischenkreisspannung U1 erreicht sind. Dann erfolgt eine Überbrückung des Widerstands 7 und des Hilfsschützes 6 mittels des Hauptschützes 8. Ein herkömmliches Schaltnetzteil 9 würde während der Hochladephase zu einem Zeitpunkt t1 aktiv werden, wobei ein Ansprechen der Überwachungsschaltung zu einer Störung führen würde.

Ein erfindungsgemäßes Schaltnetzteil 9 blockiert die Ansteuerung eines im Schaltnetzteil 9 angeordneten Schaltelements so lange, bis der Zwischenkreis aufgeladen ist. Ein durch den Einschaltstrom des Schaltnetzteils 9 hervorgerufener Spannungsabfall wird verzögert, sodass keine Störung des Umrichters auftritt.

Beispielsweise umfasst das Schaltnetzteil 9 einen DIP-Schalter zur Aktivierung dieses erfindungsgemäßen Startup-Delay. Ein solches Schaltnetzteil 9 ist zur Anschaltung an Umrichter-Zwischenkreise und an andere Versorgungsquellen ohne die beschriebene Hochlaufproblematik geeignet. Bei aktiviertem Startup-Delay beginnt eine voreingestellte Startverzögerungsdauer T (z.B. 10 Sekunden) zu laufen, sobald die Zwischenkreisspannung U bei einem Zeitpunkt t0 einen bestimmten Schwellwert Us erreicht. Dabei ist der Schwellwert Us einerseits kleiner als die Einschaltschwelle Ue zum Zeitpunkt t1, bei welcher das Schaltnetzteil 9 ohne Startup-Delay üblicherweise zu takten beginnen würde. Andererseits wird der Schwellwert Us so groß gewählt, dass ein Hochladen des Zwischenkreises sicher erkannt wird.

Um einem Bedienpersonal die Funktion des Schaltnetzteils 9 anzuzeigen ist es sinnvoll, wenn der Ablauf der Startverzögerungsdauer T signalisiert wird, beispielsweise mittels einer blinkenden Leuchtdiode.

Üblicherweise hängt die Dauer einer Hochladephase von der Umrichtergröße ab. Kleine Umrichter mit relativ wenig Zwischenkreiskapazität 5 erreichen die Nenn-Zwischenkreisspannung U1 bereits früher. Der Anstieg der Zwischenkreisspannung U' verläuft dabei steiler als bei größeren Umrichtern.

Zur Anpassung des Schaltnetzteils 9 an die Hochladedauer verschiedener Umrichter ist die Startverzögerungsdauer T vorteilhafterweise einstellbar. Kleinere Umrichter sind dann früher verfügbar. Ein günstiger Bereich für die Startverzögerungsdauer T liegt zwischen zwei und zehn Sekunden.

Eine Einstellung der Startverzögerungsdauer T erfolgt in einem Programmiermodus. Aktivierbar ist der Programmiermodus beispielsweise, indem ein Funktionsschalter nach dem Hochlaufen der Zwischenkreisspannung innerhalb einer vordefinierten Aktivierungszeitspanne betätigt wird. Dieser Funktionsschalter kann auch der DIP-Schalter zur Aktivierung des Startup-Delay sein. Der Programmiermodus wird dann gestartet, indem der DIP-Schalter nach der Hochlaufphase auf Deaktivierung der Starup-Delay-Funktion umgeschaltet wird. Sobald sich das Gerät im Programmiermodus befindet, zeigt ein Signalisierungselement (z.B. Leuchtelektrode) die einzustellende Startverzögerungsdauer T an. Beispielsweise blinkt eine Leuchtdiode im Sekundentakt. Zur Einstellung einer z.B. sechs Sekunden langen Startverzögerungsdauer T wird ein sechsmaliges Blinken der Leuchtdiode abgewartet, bis eine Betätigung des Funktionsschalters die Startverzögerungsdauer T festlegt. Wird der Funktionsschalter durch den DIP-Schalter gebildet, erfolgt die Festelegung der Startverzögerungsdauer T, indem der DIP-Schalter auf Aktivierung der Starup-Delay-Funktion umgeschaltet wird.

Nach der Einstellung der Startverzögerungsdauer T wird der Programmiermodus automatisch beendet und das Gerät gestartet. Dies kann dem Bedienpersonal zum Beispiel durch schnelles Blinken der Leuchtdiode angezeigt werden. Beim erstmaligen Startvorgang nach einer Änderung der Startverzögerungsdauer T ist es sinnvoll, wenn die neue Startverzögerungsdauer T zur Kontrolle mittels Signalisierungselement angezeigt wird. Beispielsweise blinkt die Leuchtdiode im Sekundentakt entsprechend der Anzahl der eingestellten Sekunden.

Günstigerweise ist der Programmiermodus auch während des laufenden Betriebs des Schaltnetzteils 9 aktivierbar, beispielsweise durch mehrmaliges Umschalten des Funktionsschalters.

## Patentansprüche

1. Verfahren zum Betreiben eines Schaltnetzteils (9), welches eine Steuerung zur Ansteuerung eines im Schaltnetzteil angeordneten Schaltelements umfasst und an einen Zwischenkreis eines Umrichters angeschlossen ist, **dadurch gekennzeichnet, dass** ein Schwellwert (Us) einer eingangsseitig am Schaltnetzteil anliegenden Zwischenkreisspannung (U, U') erkannt wird, dass ab Erreichen des Schwellwerts (Us) eine Startverzögerungsdauer (T) beginnt und dass bis zum Ablaufen der Startverzögerungsdauer (T) die Ansteuerung des Schaltelements blockiert ist.

2. Verfahren nach Anspruch 1, **dadurch gekennzeichnet, dass** mittels eines Funktionsschalters ein Programmiermodus aktiviert wird, während dem ein Meldeelement wiederkehrende Signale zum Anzeigen der einzustellenden Startverzögerungsdauer (T) abgibt und wobei die Startverzögerungsdauer (T) durch nochmalige Betätigung des Funktionsschalters festgelegt wird.

3. Schaltnetzteil (9), welches eine Steuerung zur Ansteuerung eines im Schaltnetzteil angeordneten Schaltelements umfasst und an einen Zwischenkreis eines Umrichters angeschlossen ist, **gekennzeichnet durch** Mittel zum Erkennen eines Schwellwerts (Us) einer eingangsseitig am Schaltnetzteil anliegenden Zwischenkreisspannung (U,U'), Mittel zum Start einer Startverzögerungsdauer (T) ab dem Erreichen des Schwellwerts (Us) durch Aktivieren eines Startup-Delays, und Mittel zum Blockieren der Ansteuerung des Schaltelements bis zum Ablaufen der Startverzögerungsdauer (T).

4. Schaltnetzteil (9) nach Anspruch 3, **dadurch gekennzeichnet, dass** das Schaltnetzteil (9) einen Schaltkreis zum Erfassen eines eingangsseitigen Spannungsanstiegs aufweist und dass eine Sperrschaltung vorgesehen ist, um die Ansteuerung des Schaltelements während der Startverzögerungsdauer (T) zu blockieren.

5. Schaltnetzteil (9) nach Anspruch 3 oder 4, **dadurch gekennzeichnet, dass** das Schaltnetzteil (9) einen DIP-Schalter zur Aktivierung des Startup-Delay umfasst.

6. Schaltnetzteil (9) nach einem der Ansprüche 3 bis 5, **dadurch gekennzeichnet, dass** das die Startverzögerungsdauer (T) mittels Bedienmittel des Schaltnetzteils (9) einstellbar ist.

7. Schaltnetzteil (9) nach Anspruch 6, **dadurch gekennzeichnet, dass** das Schaltnetzteil (9) einen Funktionsschalter zur Einstellung der Startverzögerungsdauer (T) umfasst.

8. Schaltnetzteil (9) nach Anspruch 7, **dadurch gekennzeichnet, dass** das der DIP-Schalter als Funktionsschalter zur Einstellung der Startverzögerungsdauer (T) ausgebildet ist.

9. Schaltnetzteil (9) nach einem der Ansprüche 6 bis 8, **dadurch gekennzeichnet, dass** das Schaltnetzteil (9) ein Meldeelement zur Einstellung der Startverzögerungsdauer (T) umfasst.

10. Schaltnetzteil (9) nach einem der Ansprüche 3 bis 9, **dadurch gekennzeichnet, dass** das Schaltnetzteil (9) zur Versorgung einer Steuerung (11) des Umrichters verwendet wird.

11. Verwendung eines Schaltnetzteil (9) nach einem der Ansprüche 3 bis 9 zur Versorgung des Umrichters und/oder dessen Peripherie.

## Claims

1. Method for operating a switch mode power supply (9), which comprises a control for controlling a switch element arranged in the switch mode power supply and is connected to a DC link of a converter, **characterised in that** a threshold value (Us) of a DC link voltage (U, U') applied to the input-side of the switch mode power supply is detected, that a start delay period (T) commences after the threshold value (Us) is reached and that control of the switch element is blocked until the start delay period (T) has elapsed.

2. Method according to claim 1, **characterised in that** a programming mode is activated by means of a function switch, during which programming mode a signalling element outputs repeated signals to indicate the start delay period (T) to be set, and wherein the start delay period (T) is specified by renewed actuation of the function switch.

3. Switch mode power supply (9), which comprises a control for controlling a switch element arranged in the switch mode power supply and is connected to a DC link of a converter,
**characterised by**
means for detecting a threshold value (Us) of a DC link voltage (U, U') applied to the input-side of the switch mode power supply,
means for starting a start delay period (T) after the threshold value (Us) has been reached by activating a start-up delay, and means for blocking the control of the switch element until the start delay period (T) has elapsed.

4. Switch mode power supply (9) according to claim 3,
**characterised in that** the switch mode power supply (9) has a switching circuit for detecting a voltage rise at the input side and that a blocking circuit is provided to block the control of the switch element during the start delay period (T).

5. Switch mode power supply (9) according to claim 3 or 4, **characterised in that** the switch mode power supply (9) comprises a DIP switch for activating the start-up delay.

6. Switch mode power supply (9) according to one of claims 3 to 5, **characterised in that** the start delay period (T) can be adjusted with the aid of operating means of the switch mode power supply (9).

7. Switch mode power supply (9) according to claim 6, **characterised in that** the switch mode power supply (9) comprises a function switch for setting the start delay period (T).

8. Switch mode power supply (9) according to claim 7, **characterised in that** the DIP switch is embodied as a function switch for setting the start delay period (T).

9. Switch mode power supply (9) according to one of claims 6 to 8, **characterised in that** the switch mode power supply (9) comprises a signalling element for setting the start delay period (T).

10. Switch mode power supply (9) according to one of claims 3 to 9, **characterised in that** the switch mode power supply (9) is used to supply a control (11) of the converter.

11. Application of a switch mode power supply (9) according to one of claims 3 to 9 for supplying the converter and/or its peripherals.

## Revendications

1. Procédé pour le fonctionnement d'une alimentation à découpage (9), laquelle comporte une commande pour l'excitation d'un élément de commutation disposé dans l'alimentation à découpage et est raccordée à un circuit intermédiaire d'un convertisseur, **caractérisé en ce qu'**une valeur seuil (Us) d'une tension de circuit intermédiaire (U, U') appliquée à l'alimentation à découpage du côté entrée est détectée, **en ce qu'**à partir du moment où la valeur seuil (Us) est atteinte, une durée de retard de démarrage (T) commence, et **en ce que** jusqu'à l'expiration de la durée de retard de démarrage (T), l'excitation de l'élément de commutation est bloquée.

2. Procédé selon la revendication 1, **caractérisé en ce qu'**au moyen d'un commutateur de fonctions, un mode de programmation est activé, pendant lequel un élément d'état émet des signaux récurrents pour l'affichage de la durée de retard de démarrage (T) à ajuster et dans lequel la durée de retard de démarrage (T) est fixée par un nouvel actionnement du commutateur de fonctions.

3. Alimentation à découpage (9), laquelle comporte une commande pour l'excitation d'un élément de commutation disposé dans l'alimentation à découpage et est raccordée à un circuit intermédiaire d'un convertisseur, **caractérisée par**
des moyens pour la détection d'une valeur seuil (Us) d'une tension de circuit intermédiaire (U, U') appliquée à l'alimentation à découpage du côté entrée,
des moyens pour le démarrage d'une durée de retard de démarrage (T) à partir du moment où la valeur seuil (Us) est atteinte par activation d'un Startup-Delay dit retard de démarrage, et
des moyens pour le blocage de l'excitation de l'élément de commutation jusqu'à l'expiration de la durée de retard de démarrage (T).

4. Alimentation à découpage (9) selon la revendication 3, **caractérisée en ce que** l'alimentation à découpage (9) comprend un circuit de commutation pour l'enregistrement d'une montée en tension du côté entrée et **en ce qu'**il est prévu une commutation d'inhibition afin de bloquer l'excitation de l'élément de commutation pendant la durée de retard de démarrage (T).

5. Alimentation à découpage (9) selon la revendication 3 ou la revendication 4, **caractérisée en ce que** l'alimentation à découpage (9) comporte un commutateur DIP pour l'activation du Startup-Delay dit retard de démarrage.

6. Alimentation à découpage (9) selon l'une des revendications 3 à 5, **caractérisée en ce que** la durée de retard de démarrage (T) est ajustable au moyen de moyens de commande de l'alimentation à découpage (9).

7. Alimentation à découpage (9) selon la revendication 6, **caractérisée en ce que** l'alimentation à découpage (9) comporte un commutateur de fonctions pour l'ajustement de la durée de retard de démarrage (T).

8. Alimentation à découpage (9) selon la revendication 7, **caractérisée en ce que** le commutateur DIP se présente sous la forme d'un commutateur de fonctions pour l'ajustement de la durée de retard de démarrage (T).

9. Alimentation à découpage (9) selon l'une des revendications 6 à 8, **caractérisée en ce que** l'alimentation à découpage (9) comporte un élément d'état pour l'ajustement de la durée de retard de démarrage (T).

10. Alimentation à découpage (9) selon l'une des revendications 3 à 9, **caractérisée en ce que** l'alimentation à découpage (9) est utilisée pour l'alimentation d'une commande (11) du convertisseur.

11. Utilisation d'une alimentation à découpage (9) selon l'une des revendications 3 à 9 pour l'alimentation du convertisseur et/ou de sa périphérie.
